# EUROPEAN PATENT APPLICATION

(11) **EP 2 113 894 A2**
(43) Date of publication of application: **04.11.2009**
(21) Application number: 08022282.1
(22) Date of filing: 22.12.2008
(51) Int. Cl.: G07G 1/00, G07G 1/01

(54) **Self-checkout terminal**

(30) Priority: 26.12.2007 JP 2007333875
(71) Applicant: Toshiba TEC Kabushiki Kaisha, Tokyo 141-8664 (JP)
(72) Inventor: Ryo, Ekigen Intellectual Property Division. Toshiba Tec K.K., Tokyo 141-8664 (JP)
(74) Representative: Kramer - Barske - Schmidtchen

(57) **Abstract**

In the case of displaying a button in a predetermined scene during an item sales data process on a self-checkout terminal (101), an operation history stored in association with an input customer code is referred to. When it is determined that the number of times of touching a button to be displayed in the scene is equal to or larger than a predetermined number of times, display of the button is skipped, and the process is continued without stopping the item sales data process.

## Description

### CROSS REFERENCE TO RELATED APPLICATION

The present application is based on and claims the benefit of priority of Japanese Patent Application No. 2007-333875 filed on December 26, 2007, the entire contents of which is incorporated herein by reference.

### BACKGROUND OF THE INVENTION

### FIELD OF THE INVENTION

The present invention relates to a self-checkout terminal for enabling a customer to perform a self-checkout.

### DISCUSSION OF THE BACKGROUND

In recent years, a self-checkout terminal is being developed, enabling a self-checkout of a customer by disposing various user interfaces for executing an item sales data process in positions where the operation by a customer, provision of information to a customer, and issuance of a receipt to a customer can be performed (refer to Japanese Unexamined Patent Publication No. 2007-72560). As the various user interfaces, for example, an item code input unit for inputting an item code such as a barcode reader, a display unit for displaying information, an information input unit for inputting information such as a key button and a touch panel, a settlement unit capable of performing settlement such as an automatic teller using coins and bills, a receipt printer, and the like are prepared.

A self-checkout terminal executes processes starting from reading of an item code until a settlement process by operation of a customer himself/herself. Therefore, to make the customer perform the correct operations, it is important to kindly guide the operating procedure.

Japanese Unexamined Patent Publication No. 2007-72560 describes a self-checkout terminal in which various kinds of guidance according to the procedure of the self-checkout are displayed on a display unit. The guidance supports the operation of a customer is supported so that the customer can perform correct operations.

As guidance displayed according to the procedure of the self-checkout, there are buttons which are displayed together with a character string for confirming a user about a present state of a self-checkout and can be touched via a touch panel. For example, guidance is performed by a button indicated with "Yes" which is displayed together with a character string of "Is this OK?". The guidance using such a button is very convenient for an inexperienced customer who operates the self-checkout terminal, especially for the first time, for he/she can grasp step of a self-checkout. On the other hand, the button touching operation is forced to any customers. This operation is troublesome for a customer accustomed to the operation.

Accordingly, an object of the present invention is to provide a self-checkout terminal which gives comfortable guidance to both inexperienced customers and accustomed customers to the operation.

### BRIEF SUMMARY OF THE INVENTION

According to the novel self-checkout terminal (101) of the present invention, including: (I) a settlement terminal (201) including a customer code input unit (203) for inputting a customer code specifying a customer, an item code input unit (203) for inputting an item code specifying an item, a display unit (210) for displaying information on a screen, a touch panel (211) disposed on the screen, a settlement unit (221a) capable of performing settlement, and an information processor (253) for executing an information process; and (II) a weighing apparatus (301) including a table (303a, 306) on which an item is to be placed, a signal output unit (357a) for outputting an output signal according to weight of the item placed on the table, a transmitting unit (358) for transmitting data to the settlement terminal, and a computing unit (357a) for outputting a weight value based on the output signal to the transmitting unit. The information processor executes: (i) an item sales data process including a retrieving process for obtaining unit price and reference weight corresponding to an item code input by the item code input unit from an item data file (PF) in which, in correspondence with an item code, unit price and reference weight of an item determined by the item code are stored, a weight check process for determining whether a weight value transmitted from the weighing apparatus after input of the item code by the item code input unit and a reference weight obtained by the retrieving process are the same or not, an item information registering process for storing item information including the input item code and the unit price obtained by the retrieving process when it is determined that the weight values are the same as a result of the weight check process, and a settlement process for calculating a settlement amount on the basis of the unit price obtained by the retrieving process and performing settlement using the settlement unit on the settlement amount; (ii) a stopping process for stopping procedure of the item sales data process by displaying a button on a predetermined scene during the item sales data process on the screen of the display unit; (iii) a re-starting process, when the button is touched via the touch panel, for cancelling the stop of procedure of the item sales data process and continuing the process; (iv) an operation history storing process for storing history of operations of touching the button in association with a customer code input by the customer code input unit into a storing unit (254); and (v) a process of determining the number of operation times, for referring to the operation history prior to display of the button on the screen of the display unit in a predetermined scene during the item sales data process and, when the number of times of touching the button to be displayed in the scene is equal to or larger than a predetermined number of times, continuing the item sales data process without performing the stopping process.

According to the novel method of displaying a screen of a self-checkout terminal (101) of the present invention, including: (i) calculating a weight value on the basis of an output signal output from a signal output unit of a weighing apparatus and making a transmitting unit of the weighing apparatus output the weight value toward a settlement terminal by a computing unit of the weighing apparatus, and outputting an output signal according to weight of an item placed on a table of the weighing apparatus by the signal output unit, wherein the settlement terminal including a customer code input unit for inputting a customer code specifying a customer, an item code input unit for inputting an item code specifying an item, a display unit for displaying information on a screen, a touch panel disposed on the screen, a settlement unit capable of performing settlement, and an information processor for executing an information process; (ii) executing an item sales data process by the information processor, wherein the item sales data process including a retrieving process for obtaining unit price and reference weight corresponding to an item code input by the item code input unit from an item data file in which, in correspondence with an item code, unit price and reference weight of an item determined by the item code are stored, a weight check process for determining whether a weight value transmitted from the weighing apparatus after input of the item code by the item code input unit and a reference weight obtained by the retrieving process are the same or not, an item information registering process for storing item information including the input item code and the unit price obtained by the retrieving process when it is determined that the weight values are the same as a result of the weight check process, and a settlement process for calculating a settlement amount on the basis of the unit price obtained by the retrieving process and performing settlement using the settlement unit on the settlement amount; (iii) executing a stopping process of stopping procedure of the item sales data process by displaying a button on a predetermined scene during the item sales data process on the screen of the display unit by the information processor; (iv) executing a re-starting process, when the button is touched via the touch panel, for cancelling the stop of procedure of the item sales data process and continuing the process by the information processor; (v) executing an operation history storing process for storing history of operations of touching the button in association with a customer code input by the customer code input unit into a storing unit by the information processor; and (vi) executing a process of determining the number of operation times, for referring to the operation history prior to display of the button on the screen of the display unit in a predetermined scene during the item sales data process and, when the number of times of touching the button to be displayed in the scene is equal to or larger than a predetermined number of times, continuing the item sales data process without performing the stopping process by the information processor.

### BRIEF DESCRIPTION OF THE DRAWINGS

A more complete appreciation of the present invention and many of the attendant advantages thereof will be readily obtained as the same becomes better understood by reference to the following detailed description when considered in connection with the accompanying drawings, wherein:
FIG. 1 is a schematic diagram showing a general system configuration;
FIG. 2 is a perspective view showing a self-checkout terminal;
FIG. 3 is a perspective view showing a state where a plastic sopping bag is held by holding arms;
FIG. 4 is a block diagram showing an electrical hardware structure of a settlement terminal;
FIG. 5A is a schematic diagram showing an example of a PLU (Price Look Up) file;
FIG. 5B is a schematic diagram showing an example of a weight data file;
FIG. 6 is a flowchart showing an item sales data process;
FIG. 7 is a schematic diagram showing an electrical hardware structure of a weighing apparatus;
FIG. 8 is a schematic diagram showing an example of operation history stored in a customer database;
FIG. 9 is a schematic diagram showing an example of a mode selection screen displayed on an LCD;
FIG. 10 is a flowchart showing an example of a display skipping process;
FIG. 11 is a flowchart showing another example of the display skipping process;
FIG. 12 (A) is a part of a schematic diagram showing an example of transition of a screen when a commodity sales data process is executed in a beginner mode;
FIG. 12(B) is another part of FIG. 12(A);
FIG. 12(C) is the other part of FIG. 12(A);
FIG. 13 (A) is a part of a schematic diagram showing another example of transition of a screen when a settlement process is executed in the beginner mode;
FIG. 13(B) is the other part of FIG. 13(A);
FIG. 14 (A) is a part of a schematic diagram showing an example of transition of a screen when the commodity sales data process is executed in a smart mode;
FIG. 14(B) is the other part of FIG. 14(A);
FIG. 15(A) is a schematic diagram showing another example of transition of a screen when the settlement process is executed in the smart mode; and
FIG. 15(B) is the other part of FIG. 15(A).

### DETAILED DESCRIPTION OF THE INVENTION

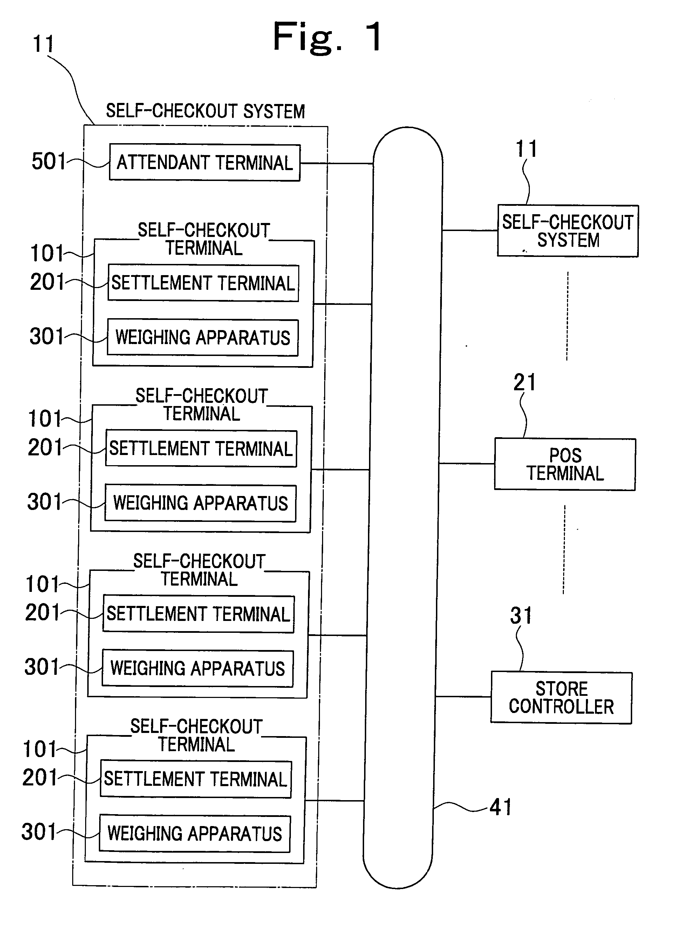

An embodiment of the present invention will be described with reference to FIGS. 1 to 15(B).

FIG. 1 is a schematic diagram showing a general system configuration. The whole system of the embodiment is constructed by connecting a plurality of self-checkout system 11, a plurality of POS terminals 21, and a store controller 31 via a communication network 41. In the self-checkout system 11, one attendant terminal 501 is assigned to a plurality of self-checkout terminals 101.

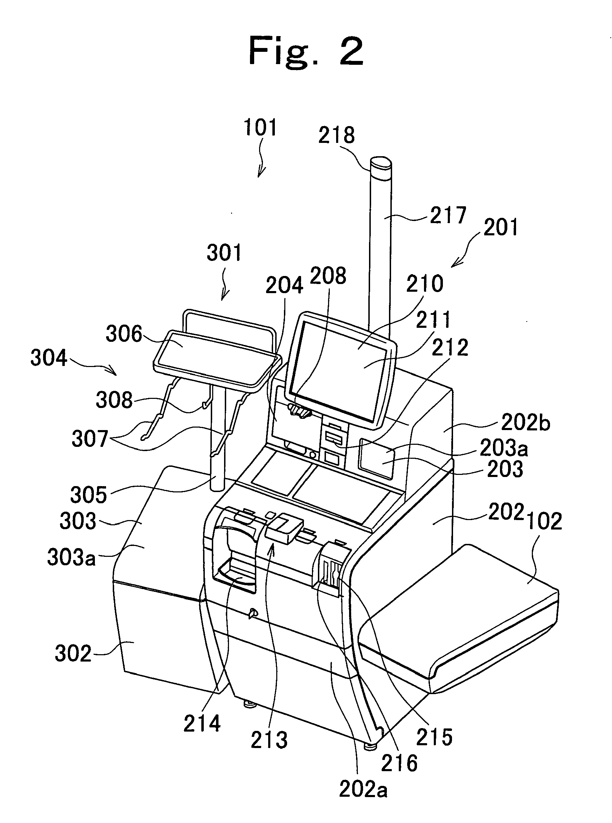

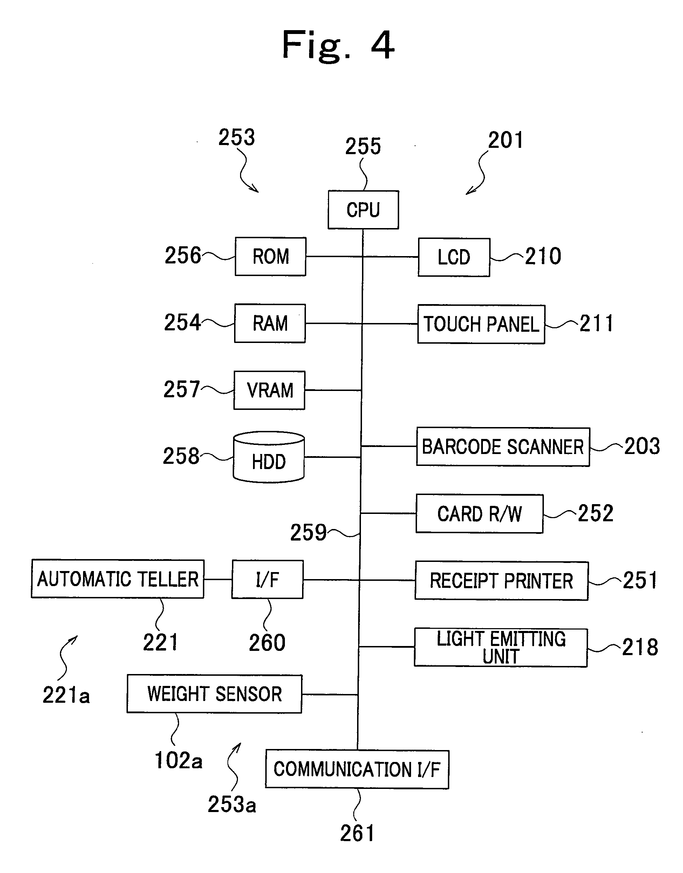

FIG. 2 is a perspective view of the self-checkout terminal 101. The self-checkout terminal 101 includes a settlement terminal 201 and a weighing apparatus 301. The settlement terminal 201 has a housing 202. From a side of the housing 202, a basket table 102 is projected. On the basket table 102, a basket (not shown) including items which a customer will purchase is placed. The basket table 102 has therein a weight sensor 102a (refer to FIG. 4).

The housing 202 of the settlement terminal 201 is constructed by a base housing 202a installed on the floor and an upper housing 202b put on the top face of the base housing 202a. The front face of the base housing 202a is tilted so as to narrow a projection area of the base housing 202a toward the bottom. The base housing 202a has a shape which is offset to the rear side toward the bottom.

A barcode scanner 203 is disposed on the right side of the upper housing 202b. A printer cover 204 is disposed on the left side of the upper housing 202b. A card insertion slot 212 is disposed between the barcode scanner 203 and the printer cover 204.

The barcode scanner 203 is a vertical scanner having a reading face 203a formed by a glass plate. The barcode scanner 203 irradiates laser beam to reading space positioned in front of the reading face 203a in a predetermined pattern. When an item is positioned in the reading space and a barcode attached to the item is directed toward the reading face 203a, the barcode scanner 203 receives reflection light from the barcode by a photosensitive element (not shown). The barcode scanner 203 decodes a light reception signal of the barcode based on an output signal of the photosensitive element, obtains an item code and a customer code expressed by the bar code as code data, and outputs the obtained code to a controller 253 (refer to FIG. 4) of the settlement terminal 203. As described above, the barcode scanner 203 functions as a customer code input unit or an item code input unit. The item code is a code for specifying an item and is attached to an item. The customer code is a code specifying a customer and is printed on a point card, in the embodiment.

The printer cover 204 is provided with a receipt outlet 208. A receipt printer 251 (see FIG. 4) is provided at the back side of the printer cover 204 in the upper housing 202b. A receipt (not shown) printed by the receipt printer 251 is issued from the receipt outlet 208. The printer cover 204 is openably attached to the upper housing 202b.

On the inside of the card insertion slot 212, a card reader/writer 252 (see FIG. 4) as a magnetic card reader/writer capable of reading/writing data to a magnetic card is provided. A credit card, which is as a magnetic card, is inserted into the card insertion slot 212.

To the upper housing 202b, an LCD 210 as a display is attached. The LCD 210 has a liquid crystal display panel. A touch panel 211 as an input unit is stacked on the screen of the LCD 210.

An automatic teller 221 (see FIG. 4), which handles coins and bills, is provided in the base housing 202a. The automatic teller 221 has a coin slot 213, a coin outlet 214, a bill inlet 215 and a bill outlet 216. The coin slot 213 is formed in the central top face of the base housing 202a. The coin outlet 214 is provided on the left side of the coin slot 213. The bill inlet 215 and the bill outlet 216 are disposed in upper right positions in the front face of the base housing 202a. The automatic teller 221 has a mechanical unit (not shown) for handling coins and bills. And the automatic teller 221 has a control unit (not shown) for controlling the mechanical unit. So the automatic teller 221 functions as a settlement unit 221a (see FIG. 4) . The structure of the mechanical unit and the procedure of the control unit will not be described since they are known.

At the backside of the base housing 202a, an indicating pole 217 is provided upright. The indicating pole 217 functions as an alarm device for displaying the present state of the self-checkout terminal 101. The indicating pole 217 has a light emitting unit 218 for selectively emitting red light and blue light at its tip.

The weighing apparatus 301 ha a weighing apparatus housing 302. A weighing plate 303 is provided on a weighing apparatus housing 302. A bag holder 304 is attached to the weighing plate 303. The weighing plate 303 has a placement table 303a on its top surface. The bag holder 304 is attached to the placement table 303a. Therefore, the weighing plate 303 functions as a pedestal for the bag holder 304. Specifically, a pole-shaped arm supporter 305 is provided upright in the center of the back side of the placement table 303a. A temporary placement table 306 on which an item is to be placed is fixed at the upper end of the arm supporter 305. The top face of the temporary placement table 306 is formed as a flat plane. The temporary placement table 306 is functions as a table for temporarily putting on which items whose barcodes are read by the barcode scanner 203 of the settlement terminal 201 are temporarily put. Both of the placement table 303a and the temporary placement table 306 act as a table on which items whose item codes are inputted are to be placed.

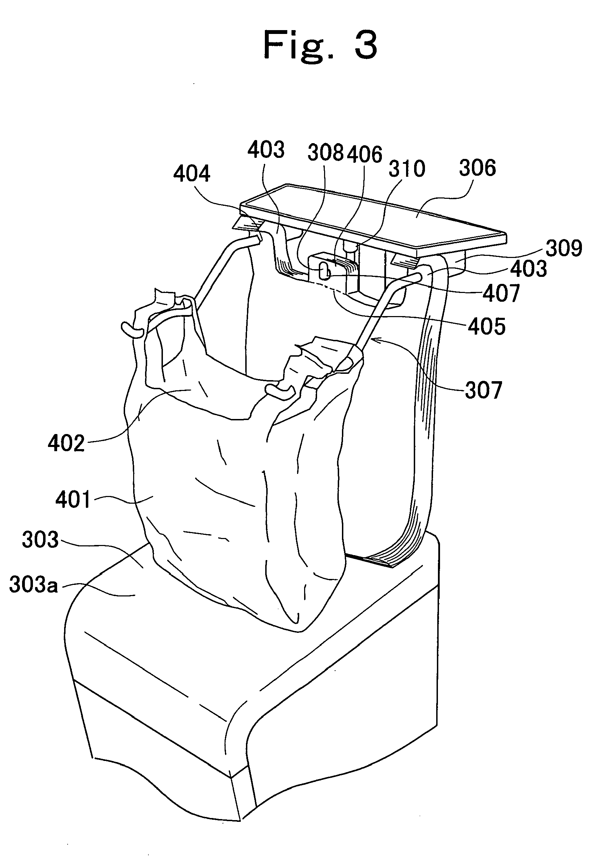

A pair of holding arms 307 and a hook 308 are attached to the under face of the temporary placement table 306. Specifically, arm attachments 309 (see FIG. 3) are fixed to both end positions of the under face of the temporary placement table 306. The methods of fixing them are various such as screwing, bonding and so on. A holding arm 307 is buried in each of the arm attachments 309. In the center position of the under face of the temporary placement table 306, a hook attachment 310 (see FIG. 3) is fixed. The methods of fixing them are also various such as screwing, bonding and so on. A hook 308 is buried in the hook attachment 310.

FIG. 3 is a perspective view showing a state where a plastic shopping bag 401 is held by the holding arms 307. The holding arms 307 hold the plastic shopping bag 401. Specifically, the plastic shopping bag 401 provided as a housing bag for the customer in a supermarket, such as a plastic bag, has an opening 402 and a pair of handles 403. The handles 403 extend from the opening 402. The plastic shopping bag 401 is folded so that the handles 403 are positioned on both sides. Then, the holding arms 307 hold the handles 403 with the opening 402 opened. To realize the holding state, a slit 404 is formed in each of the handles 403. The plastic shopping bag 401 has a pair of ears 406. The ears 406 can be left off by tearing along a perforation line 405 formed between the pair of handles 403. A hook hole 407 is formed in each of the ears 406. The holding arms 307 are held by inserting the hook 308 in the hook holes 407. As a result, the plastic shopping bags 401 are held.

FIG. 4 is a block diagram showing an electrical hardware structure of the settlement terminal 201. The settlement terminal 201 has therein the controller 253 as an information processor. The controller 253 has a semiconductor chip configuration in which, for example, an operation sequence is written. As another example, the controller 253 may have a microcomputer structure operated by storing an operation program in a RAM 254 or the like. In this embodiment, the controller 253 having the microcomputer structure will be described.

A CPU 255 acts as main of the controller 253. To the CPU 255, a ROM 256 for fixedly storing fixed data, a RAM 254 as a storage for rewritably storing variable data, a VRAM 257 for generating images to be displayed on the LCD 210, and a HDD 258 are connected via a system bus 259.

To the controller 253, the barcode scanner 203, the LCD 210, the touch panel 211, the card reader/writer 252, the receipt printer 251, the light emitting unit 218, and an interface 260 for intermediating data communication with the automatic teller 221 are connected via the system bus 259. These components are controlled by the controller 253. A communication interface 261 is also connected to the controller 253 via the system bus 259. The communication interface 261 is connected to the communication network 41. And the communication interface 261 realizes data communication between the attendant terminal 501 and the store controller 31 and the self-checkout terminal 101. An interface (not shown) for realizing data communication with the weighing apparatus 301 is also connected to the controller 253 via the system bus 259.

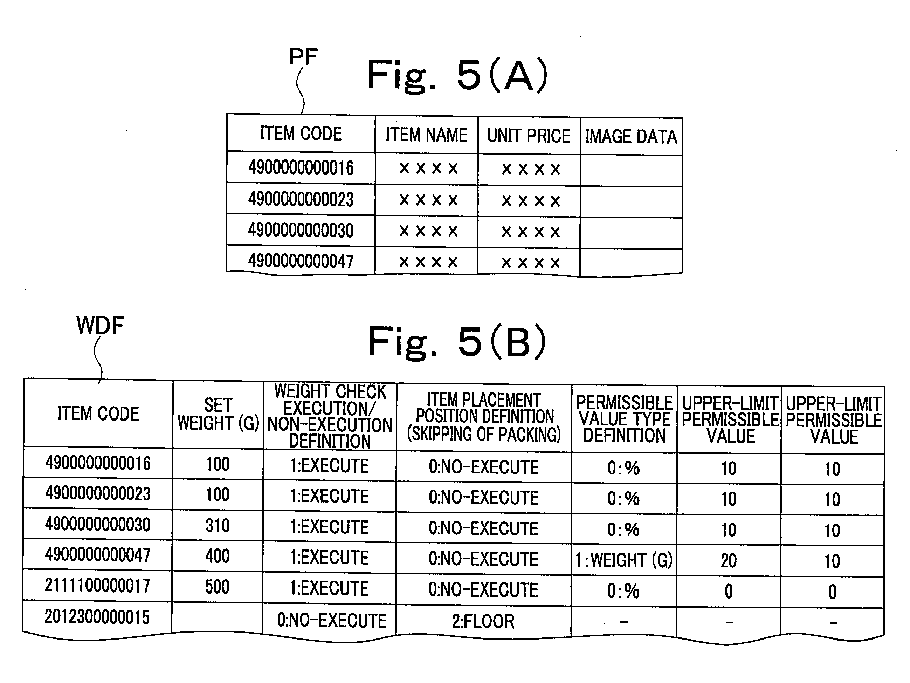

The HDD 258, connected to the controller 253, stores operation programs, various display frames, and various files. The HDD 258 stores, as the files, a PLU file PF (see FIG. 5A), a department file, a weight data file WDF (see FIG. 5B), an image file, a sales file and so on (the files except for the PLU file PF and the weight data file WDF are not shown). When the settlement terminal 201 starts up, all or part of the operation programs, the various display frames, the various files, the various rule information, and the like are copied onto the RAM 254 so as to be used. The various files such as the PLU file PF, the weight data file WDF, the department file, the image file, and the sales file construct an item data file.

In the PLU file as a component of the item data file, not only a unit price but also an item name, information of whether the item is discounted or not, discount price, M & M (Mix and Match) information, and the like are rewritably stored in correspondence with an item code specifying an item. The item name includes text data of an item name of an item specified by the item code and image data of the item.

In the department file as a component of the item data file, the unit price, the item image, information of whether the item is discounted or not, discount price, M&M (Mix and Match) information, and the like are rewritably stored in correspondence with the department code of the item which is not stored in the PLU file are rewritably stored. The item image includes text data of the item name of an item specified by the department code, and image data of the item.

FIG. 5A is a schematic diagram showing an example of the PLU file PF. In the PLU file PF, the item name, the unit price, and the image data are stored in correspondence with the item code. The item name is text data corresponding to the name of the corresponding item. The image data is image of the corresponding item.

FIG. 5B is a schematic diagram showing an example of the weight data file WDF. In the weight data file WDF, set weight (g), definition of whether weight check is executed or not, item placement position definition (skip of packing), permissible value type definition, upper limit permissible value, and lower limit permissible value are stored in correspondence with the item code.

In the set weight (g), a set value of the weight of the item specified by the item code is stored, whether or not an item specified by the item code is an item which is unnecessary to be checked its own weight check as described below.

The definition of whether weight check is executed or not is, as described above, definition information for storing whether the weight check is executed or not in correspondence with an item code. The controller 253 of the self-checkout terminal 101 interprets that "0" in the definition of whether weight check is executed or not denotes that the weight check is not performed, and "1" denotes that the weight check is performed. An item which is not subjected to the weight check is, for example, an item which is too light to be weighted by the weighing apparatus 301. As another example an item like that is too heavy to be moved to the placement table 303a of the weighing apparatus 301. The definition of whether weight check is executed or not may be included in the PLU file PF.

By the item placement position definition (skip of packing), as the placement position of an item whose barcode is read by the barcode scanner 203, the placement table 303a (weighting is not skipped), the temporary placement table 306 (weighting is skipped (too light)), or the floor (weighting is skipped (too heavy)) is defined for each of the items. The controller 253 of the self-checkout terminal 101 interprets that "0" denotes the placement table 303a (weighting is not skipped), "1" denotes the temporary placement table 306 (weighting is skipped (too light)), and "2" denotes the floor (weighting is skipped (too heavy)). As another example, the item placement position definition may be included in the PLU file PF. As further another example, characteristic information of the characteristics of an item is stored in the PLU file PF. The characteristic information is such as fragile, breakable, deformable, and heavy, and so on. As an example, the temporary placement table 306 is defined as the placement place for an item having the characteristics such as fragile, breakable, and deformable. The floor is defined as the placement place for an item having the characteristic such as heavy. As further another example, the floor is defined as the placement place for an item whose barcode is read and whose weight stored in the weight data file WDF is heavier than the specified weight.

The permissible value type definition is information for determining whether the permissible range of the set weight (g) is set by a ratio or upper and lower limit values. In the weight check process (described later), process of comparing the actual weight calculated by the weighing apparatus 301 and the weight stored in the set weight (g) is executed. At this time, the permissible range for the set weight (g) is set. The permissible range is obtained by a ratio to the weight value stored in the set weight (g) or the upper and lower limit values which are set as numerical values in accordance with the definition stored in the permissible value type definition.

As the upper and lower permissible values, numerical information for determining the permissible range for the set weight (g) is stored. In the case where the ratio to the weight value stored in the set weight (g) is used as the permissible range in the permissible value type definition, the numerical value stored as the upper limit or lower limit permissible value is a numerical value in %. In the case where concrete numerical values are set as the permissible range of the upper-limit and lower-limit values for the weight value stored in the set weight (g) in the permissible value type definition, the concrete numerical values themselves are stored as the upper-limit and lower-limit permissible values.

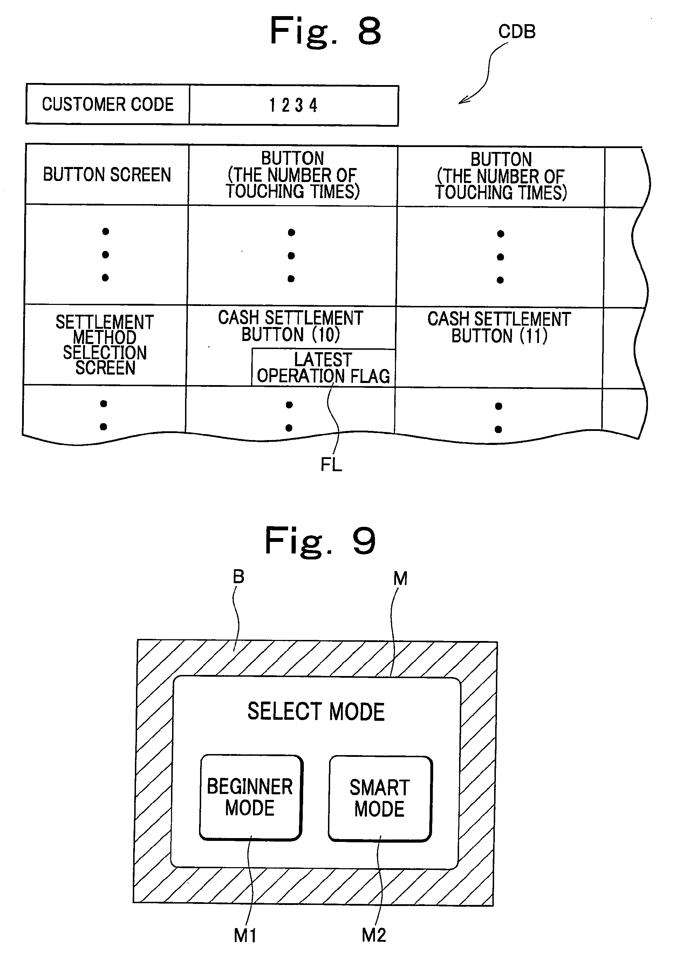

Further, a customer database CDB (see FIG. 8) is stored in the HDD 258. The customer database CDB is a file which stores information of a customer specified by a customer code so as to be associated with the customer code. In the customer database CDB, as a basic configuration, personal information of a customer, a service point equivalent to money, and the like are stored so as to be associated with the customer code. The service point is given at a predetermined ratio for payment amount of a customer for each transaction. In the embodiment, operation history of the self-checkout terminal 101 is also stored in association with the customer code. The details of the customer database CDB will be described with reference to FIG. 8.

The controller 253 controls the components and executes an item sales data process. The item sales data process includes retrieving process, weight check process, item information registering process, and a settling process.

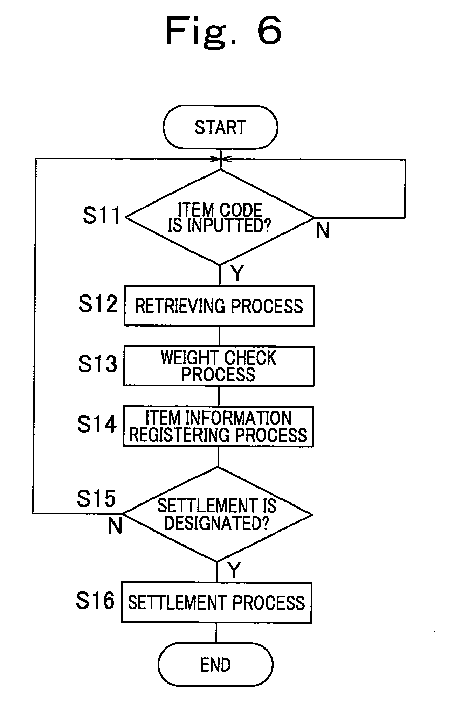

FIG. 6 is a flowchart showing the item sales data process. The controller 253 of the self-checkout terminal 101 waits for determination of whether an item code is input or not (step S11). Input operation of item codes is not only by reading of a barcode with the barcode scanner 203 but also by touching to the touch panel 211 according to indication on the LCD 210.

When input of an item code is determined (Y in step S11), the controller 253 of the self-checkout terminal 101 executes a retrieving process (step S12).

When a barcode attached to an item is read by the barcode scanner 203, the retrieving process is performed as follows. An item code specified by the barcode is recognized, various files constructing the item data file are retrieved, and unit price, weight, item name, and the like corresponding to the item code are obtained.

Next, the controller 253 of the self-checkout terminal 101 executes the weight check process subsequent to the retrieving process (step S13).

The weight check process is a process of determining whether or not weight of the item whose barcode was read, which is calculated by the weighing apparatus 301 after reading of the barcode coincides with the weight obtained by the retrieving process. Whether they coincide with each other or not is performed by determining whether the weight of the item obtained on the basis of the weight measured by the weighing apparatus 301 lies in the permissible range (for example, between the upper and lower limit values) of the weight obtained by the retrieving process, that is, within the weight range or not.

Subsequent to the weight check process, the controller 253 of the self-checkout terminal 101 executes item information registering process (step S14).

The item information registering process is a process of temporarily registering item information in the RAM 254. The item information includes an item code specified with a barcode read by the barcode scanner 203 and unit price retrieved by the retrieving process on the basis of the specified item code.

The controller 253 of the self-checkout terminal 101 determines whether settlement is designated or not subsequent to the item information registering process (step S15). The settlement designation is executed by an input operation in the touch panel 211 according to the indication on the LCD 210. When it is determined that settlement is designated (Y in step S15), the controller 253 of the self-checkout terminal 101 executes the settlement process (step S16).

The settlement process is a process of calculating settlement amount on the basis of the unit price obtained by the retrieving process and executing settlement of the settlement amount. The settlement amount is calculated by computing total sale amount including necessary calculation of consumption tax and the like according to closing operation on the touch panel 211. The settlement amount is temporarily registered in the RAM 254 or the like or registered in a sales file. In the settlement process, settlement using cash is realized on the calculated settlement amount. Cash is handled by the automatic teller 221 provided for the base housing 202a. It is also possible to provide the settlement terminal 201 with a non-contact IC card reader/writer and to enable settlement using an electron money card.

In the embodiment, the concept of the item sales data process is used as concept in a broad sense including the retrieving process, the weight check process, the item information registering process, and the settlement process.

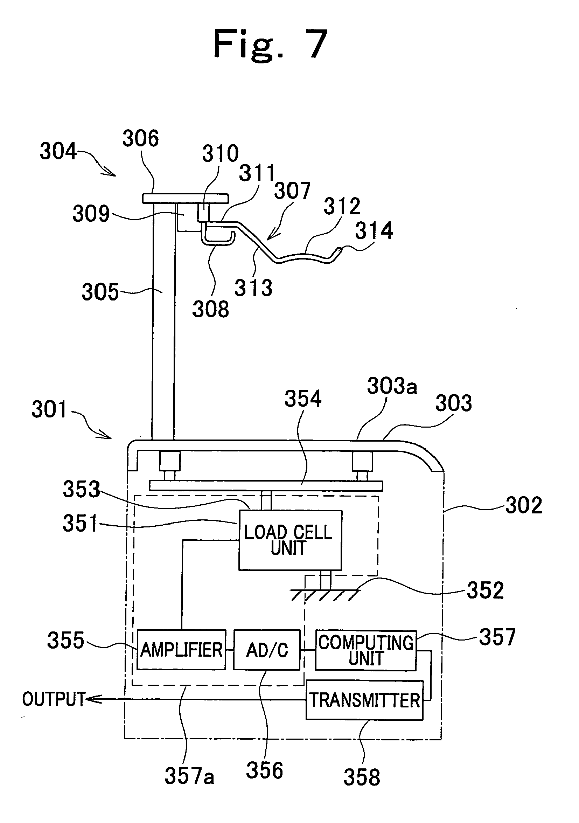

FIG. 7 is a schematic diagram showing an electric hardware configuration of the weighing apparatus 301. The weighing apparatus 301 has a load cell unit 351. One end of a load cell (whose structure and shape are not shown) of the load cell unit 351 is fixed to a base 352. A load receiver 353 is provided at the other end. A weighing frame 354 is fixed to the load receiver 353. The weighing frame 354 has an X shape in plan view. The weighing plates 303 are put at the four corners of the weighing frame 354. An output signal from the load cell unit 351 is amplified by an amplifier 355. The amplified signal is converted to a digital signal by an analog-to-digital converter (AD/C) 356, The digital signal is analyzed by a computing unit 357. That is, the load cell unit 351, the amplifier 355, and the A/D converter 356 construct a signal output unit 357a. The computing unit 357 performs weight analysis based on an output signal of the load cell unit 351. The computing unit 357 may have, for example, a semiconductor chip structure in which an operation sequence is written or a microcomputer structure in which an operation program is stored in an RAM or the like. The computing unit 357 transmits weight data as an analysis result to a transmitter 358. The weight data is output to the settlement terminal 201 via the transmitter 358. For example, the weight data is periodically transmitted to the settlement terminal 201 every predetermined cycle. As another example, the weight data is periodically transmitted every predetermined cycle after start of the self checkout process is designated by the user. The cycle in this case is, preferably, a short cycle of a few µsec to hundreds of µsec.

The details of the weight check process will now be described. The weighing apparatus 301 transmits the value of the measured weight from the transmitter 358 to the settlement terminal 201 to support the weight check process in the settlement terminal 201. The weighing apparatus 301 transmits the calculation result of the load cell unit 351 as weight data to the settlement terminal 201. During the weight check process, the controller 253 of the settlement terminal 201 waits for receiving weight data. When weight data is transmitted from the weighing apparatus 301 to the settlement terminal 201, the controller 253 always determines reception of weight data. When the reception of weight data is determined, the controller 253 of the settlement terminal 201 temporarily stores the received weigh data to the RAM 254. Next, as the weight check process, the controller 253 subtracts the immediately preceding weight value specified by the weight data temporarily stored in the RAM 254 from a weight value specified by the weight data temporarily stored in the RAM 254 to obtain the weight value of the increased amount. In this case, the controller 253 should have executed the retrieving process. That is, the controller 253 should have retrieved the PLU file PF and the weight data file WDF on the basis of the item code output from the barcode scanner 203 and obtained the unit price, the permissible range (for example, between the upper limit value and the lower limit value) of weight, and the item name corresponding to the item code. The controller 253 determines whether or not the weight value of the increased amount lies in the permissible range (for example, between the upper limit value and the lower limit value) of the weight obtained by the retrieving process. In such a manner, the weight check process is executed.

In the embodiment, in a scene such as a branch point of the item sales data process, the controller 253 of the settlement terminal 201 stops the process, generates a predetermined image, and displays the image on the LCD 210. For example, in a scene that the flow is branched to two flows, the screen has two buttons associated with the flows. In the following, such a screen will be called a "button screen". The buttons of the button screen can be touch-operated by the touch panel 211. The controller 253 of the settlement terminal 201 cancels stop of the item sales data process in accordance with the touch operation on the button. And, the controller 253 and proceeds the item sales data process to the flow associated with the button which is touch-operated.

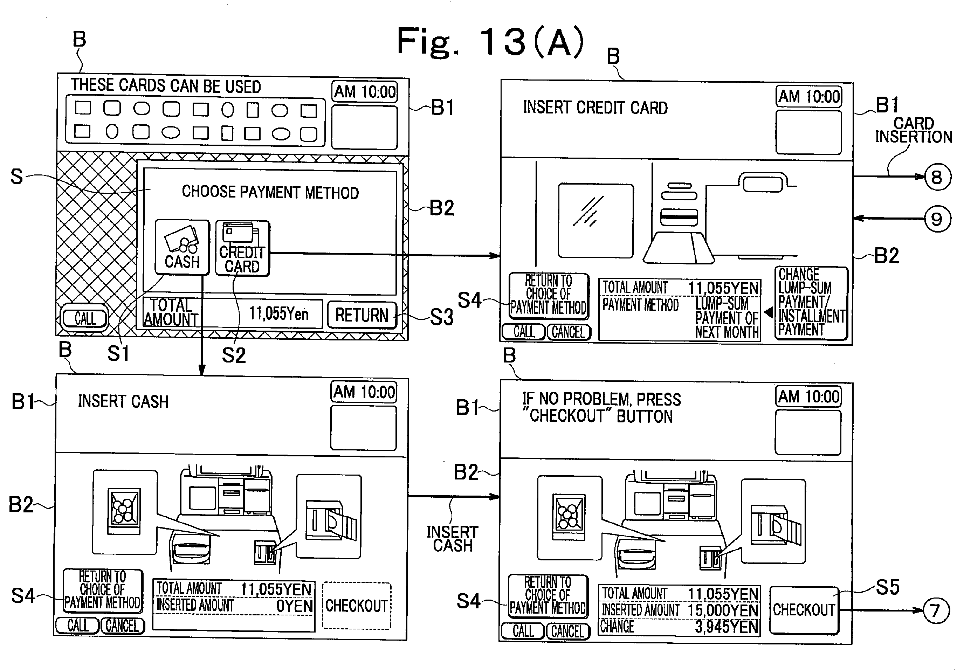

For example, in the above-described settlement process, in a settlement method selecting screen for selecting either cash settlement or credit settlement is set as a branch point after the settlement designation. At the branch point, the controller 253 of the settlement terminal 201 displays a settlement method selecting screen S (see FIG. 13(A)) as the button screen on the LCD 210. The settlement method selection screen S is displayed in a user area B2 of a basic screen (described later). The settlement method selection on screen S has a cash settlement button S1 indicated as "cash" and a credit settlement button S2 indicated as "credit". When the cash settlement button S1 is touched on the touch panel 211, the cash settlement process is continuously executed. When the credit settlement button S2 is touched on the touch panel 211, the credit settlement process is continuously executed.

In the embodiment, information of the operation of touching the button in the button screen displayed on the LCD 210 is stored as operation history into the customer database CDB.

FIG. 8 is a schematic diagram showing an example of the operation history stored in the customer database CDB. The button screen is displayed by the controller 253 at the branch point of the item sales data process. In the operation history, buttons of the button screen and the number of touch operation times are stored in corresponding with each other. Further, as the operation history, the most recently touched button in the button screen is stored with a latest operation flag FL indicating the fact.

For example, the operation history stored in the customer database CDB shown in FIG. 8 is an operation history of the customer specified by the customer code "1234". As shown in FIG. 8, the operation history in Fig. 8 includes that the customer touches the cash settlement button S1 of the settlement method selecting screen S "ten times" and touches the credit settlement button S2 "eleven times". Further, the operation history includes the latest operation flag FL as the latest operation information. The latest operation flag FL is an information which the cash settlement button S1 was touched. That is, it is known that when the settlement method selection screen S is displayed, the customer touches the credit settlement button S2 more than the cash settlement button S1, and the customer touches the cash settlement button S1 most recently.

In the embodiment, the item sales data process is executed by the controller 253 of the settlement terminal 201 in a state where the mode shifts to the "beginner mode" or "the smart mode" as a non-beginner mode.

The "beginner mode" is suitable for a customer who operates the self-checkout terminal 101 for the first time or a customer who has operated the self-checkout terminal 101 but is not accustomed to the operation. In the mode, the button screen displayed on the LCD 210 is not skipped by the controller 253 of the settlement terminal 201 with progress of the item sales data process.

The "smart mode" is a mode suitable for a customer who used the self-checkout terminal 101 and is accustomed to the operation. In the mode, the button screen is properly skipped.

Such mode selection is executed by an operation which is performed by a customer on start of the item sales data process in the self-checkout terminal 101. When it is determined that a basket is placed on the basket table 102 on the basis of an electric signal output from the weight sensor 102a, the controller 253 of the settlement terminal 201 generates a mode selection screen M (see FIG. 9) and displays it on the LCD210. That is, the weight sensor 102a and the controller 253 construct a use start determining unit 253a (see FIG. 4).

FIG. 9 is a schematic diagram showing an example of the mode selection screen M displayed on the LCD 210. The mode selection screen M is displayed so as to be superimposed on the basic screen B grayout-displayed. The details of the basic screen B will be described later. The mode selection screen M has a "beginner mode button M1" and a "smart mode button M2" together with a character string of "select a mode". When the beginner mode button M1 on the touch panel 211 is touched, the controller 253 of the settlement terminal 201 shifts to the beginner mode, and starts executing the item sales data process in which the button screen display is not skipped. On the other hand, when the smart mode button M2 on the touch panel 211 is touched, the controller 253 of the settlement terminal 201 shifts to the smart mode, and starts executing the item sales data in which the button screen display is skipped.

Next, the display skipping process to be executed by the controller 253 of the settlement terminal 201 at the time of skipping the button screen display during execution of the item sales data process in the smart mode will be described.

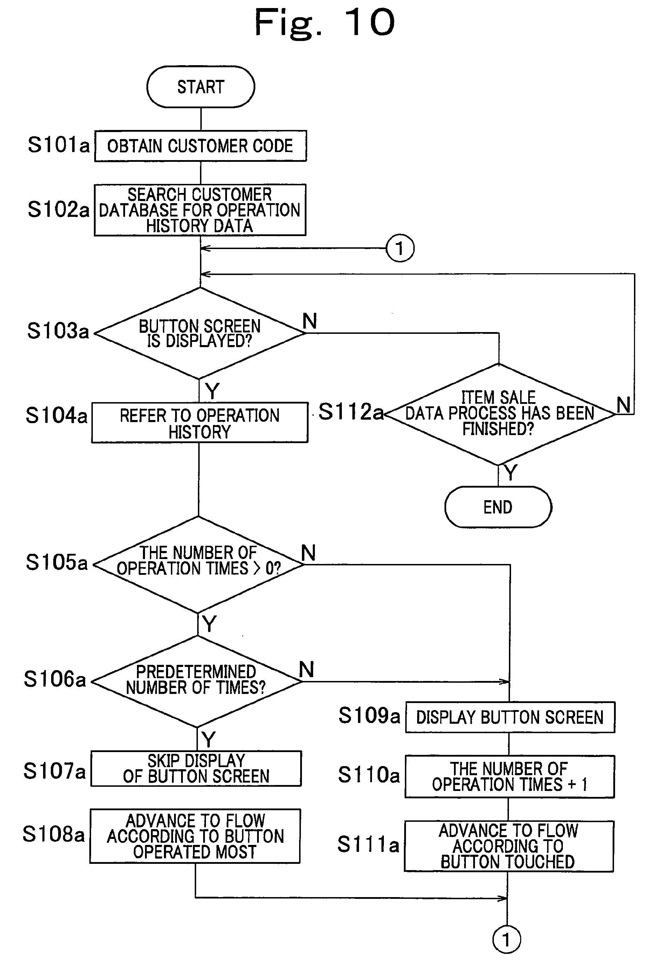

FIG. 10 is a flowchart showing an example of the display skipping process. The display skipping process is executed on the basis of a customer code input to the settlement terminal 201. For this purpose, first, the controller 253 of the settlement terminal 201 obtains the customer code (step S101a). A customer code is obtained, as described above, when the customer code printed as a barcode on a point card is read by the barcode scanner 203. That is, by receiving the customer code output from the barcode scanner 203, the controller 253 obtains the customer code.

Next, the controller 253 of the settlement terminal 201 searches the customer database CDB on the basis of the received customer code and obtains data of the operation history of the customer specified by the customer code stored in the customer database CDB (step S102a). The obtained operation history is stored in the RAM 254.

The controller 253 of the settlement terminal 201 waits for encounter of a display scene of a button screen which is set in the item sales data process (step S103a). As described above, in this scene, a button screen having buttons which can be touched on the touch panel 211 is displayed on the LCD 210 by the controller 253.

When the controller 253 reaches a scene of displaying the button screen (Y in step S103a), the controller 253 of the settlement terminal 201 refers to the operation history obtained in step S102a (step S104a), and determines whether the total number of operation times of touching a button in the button screen to be displayed in the scene is "zero" or not (step S105a). The series of the steps S103a, S104a, and S105a construct the process of determining the number of operation times.

When the number of button touching operation times is "zero" (N in step S105a), the controller 253 of the settlement terminal 201 determines that the operation of the customer in this scene is the first time, generates a button screen to be displayed in this scene, and displays the button screen to the LCD 210 (step S109a). When the operation of touching a button in the button screen is performed, the controller 253 of the settlement terminal 201 updates the operation history by incrementing the number of operation times of touching the button by "+1" (step S110a), cancels the stopping of the item sales data process, and advances the item sales data process to the next flow according to the touched button (step S111a). The operation is similarly performed also in the case where the button screen has a plurality of buttons. The controller 253 of the settlement terminal 201 waits for encounter of a scene of display of the button screen (step S103a). The waiting (step S103a) continues until the end of the item sales data process (Y in step S112a). The series of the steps S109a, S110a, and S111a construct a stopping process. The step S110a corresponds to the operation history storing process. The step S111a corresponds to the re-starting process.

On the other hand, when the total number of operation times of touching the button in the button screen is not "zero" (Y in step S105a), the controller 253 of the settlement terminal 201 determines whether the total number of operation times of touching the button has reached a predetermined number or not (step S106a). The case where the controller 253 reaches a scene where the settlement method selecting screen S is to be displayed in step S103a and refers to the operation history of the customer database CDB show in FIG. 8 in step S104a will be described as an example. In the operation history shown in FIG. 8, the total number of operation times of touching the cash settlement button S1 and the credit settlement button S2 is "21". When the "predetermined number of times" in step S106a is "20", the controller 253 of the settlement terminal 201 determines that the total number of touch operating times is equal to or larger than the predetermined number of times (Y in step S106a), and skips display of the settlement method selecting screen S on the LCD 210 (step S107a). The controller 253 continues the process to the flow of the credit settlement according to the credit settlement button S2 which is touched by the largest number of times (step S108a). That is, the credit settlement is selected without displaying the settlement method selecting screen S on the LCD 210 and touching the credit settlement button S2.

When the "predetermined number of times" in step S106a is "30", the controller 253 of the settlement terminal 201 determines that the total number of touch operating times is not equal to or larger than the predetermined number of times (N in step S106a), and displays the settlement method selecting screen S on the LCD 210 (step S109a). That is, the display of the settlement method selecting screen S is not skipped.

When display of the button screen is skipped in step S107a, in some cases, a customer desires a different option. Therefore, also in the case of skipping display of the button screen and continuing the process, the controller 253 can move to a flow in the case where a different option is selected. For example, the case where display of the settlement method selecting screen S is skipped in step S107a and the process is advanced to credit settlement in step S108a will be described. In this case, in the embodiment, the controller 253 of the settlement terminal 201 displays the selection screen display button S4 indicated as "return to payment method selection" in the user area B2 of the basic screen B. When the selection screen display button S4 is touched via the touch panel 211, the controller 253 of the settlement terminal 201 generates and displays the settlement method selection screen S. Consequently, the customer can select cash settlement.

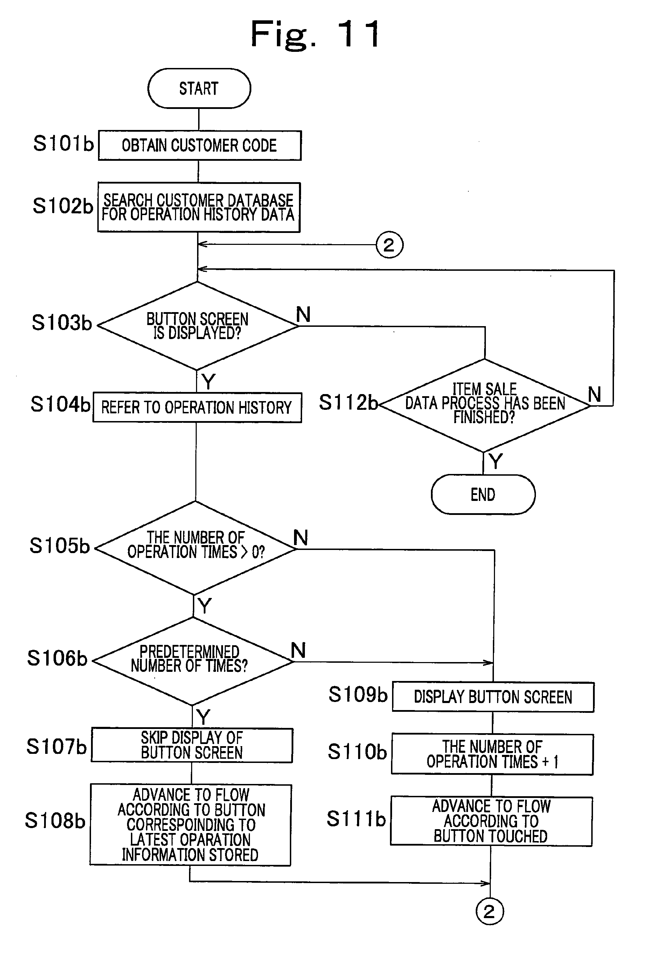

Another example of the display skipping process will be described with reference to FIG. 11.

FIG. 11 is a flowchart showing another example of the display skipping process. In the display skipping process to be described with reference to FIG. 11, the step S108b is executed in place of step S108a in FIG. 10 (since the processes in the other steps are the same, they will not be described). That is, in the example, after display of the button screen is skipped (step S107b), the controller 253 of the settlement terminal 201 advances to the item sales data process to the flow according to the button in which the latest operation flag FL is stored as latest operation information (step S108b). In such a manner, the button screen can be skipped while reflecting the recent action of the customer.

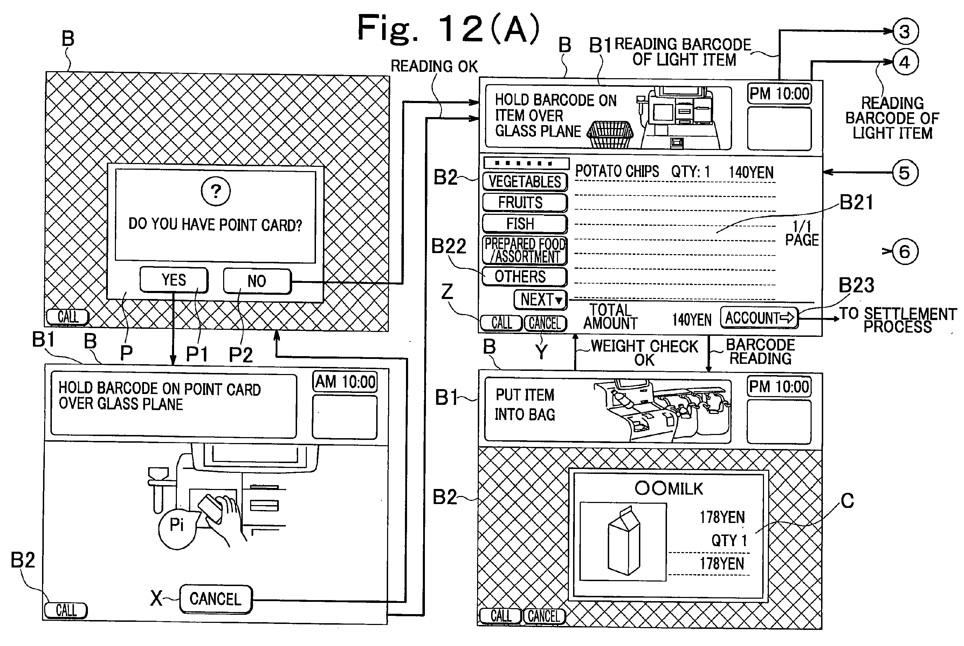

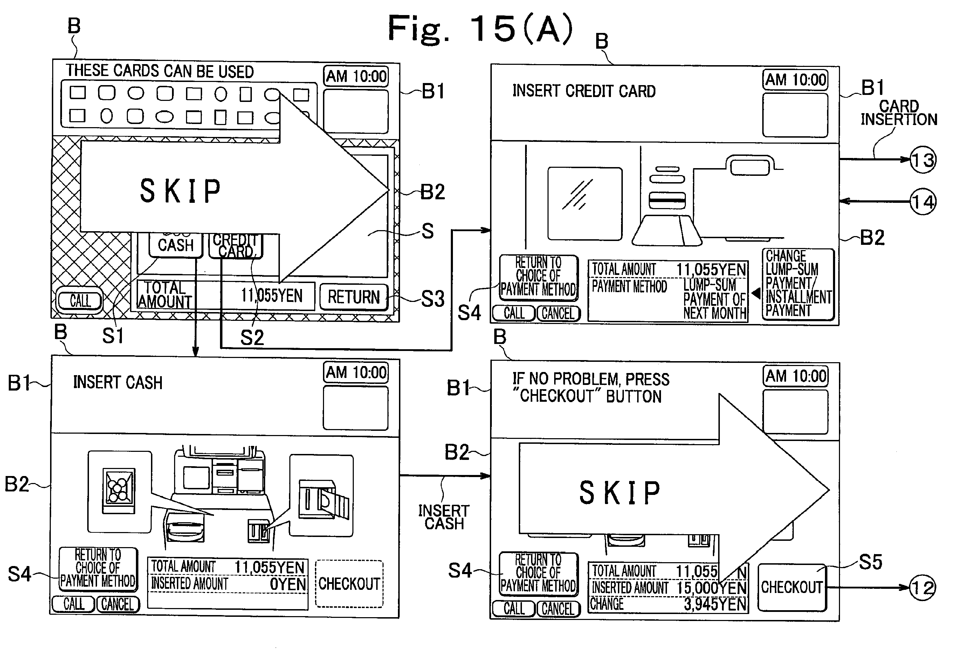

With reference to FIGS. 12(A) to 15(B), a screen transition example of the LCD 210 at the time of executing the item sales data process will be described. The main body of executing the screen transition described below is the controller 253 of the settlement terminal 201.

First, an example of the screen transition in a state where the apparatus shifts to the beginner mode will be described with reference to FIGS. 12(A) to 13(B). In a state where the apparatus shifts to the beginner mode, the display skipping process is not executed. That is, the button screen is not skipped.

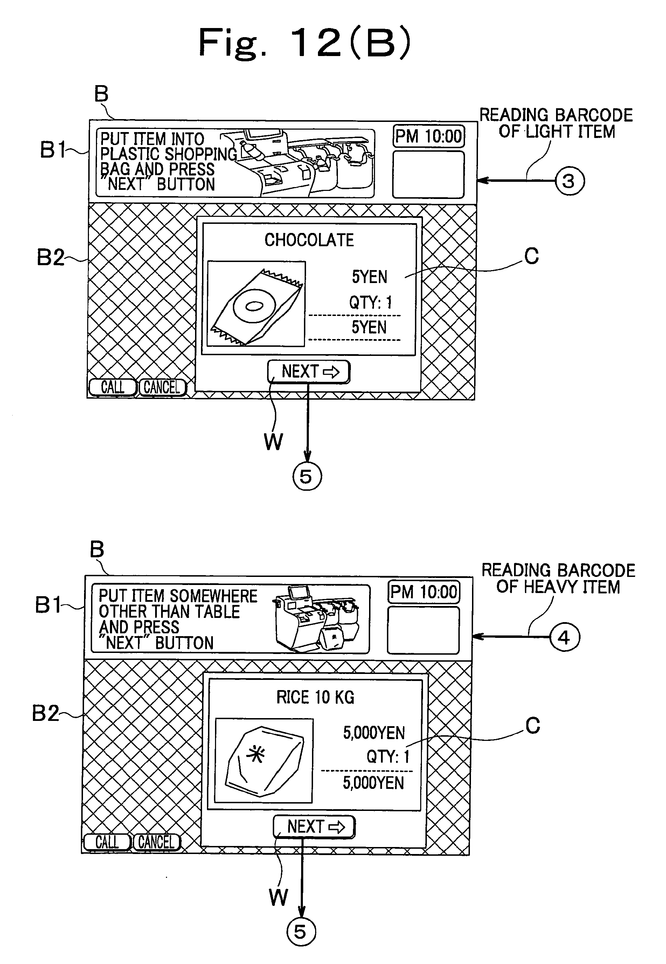

FIG. 12(A) and (B) is a schematic diagram showing an example of the screen transition when the item sales data process is executed in the beginner mode. First, when a beginner mode button M1 in the mode selection screen M (see FIG. 9) is touched and designated, the controller 253 deletes the mode selection screen M and superimposes a point card possession confirming screen P (in the upper left of FIG. 12 (A)) on a grayout basic screen B. The point card position confirming screen P has a button P1 indicating "Yes" and a button P2 indicating "No" together with a character string of "Do you have a point card?".

When the button P1 indicating "Yes " is touched, the controller 253 deletes the point card possession confirming screen P and cancels the grayout of the basic screen B.

The basic screen B will now be described. The basic screen B is constructed by a guidance display area B1 in an upper position of the screen and a user area B2 in a lower position of the screen. In the guidance display area B1, various kinds of guidance necessary to perform the self-checkout are displayed. In the user area B2, various buttons and transaction information necessary to perform the self-checkout is displayed.

In the guidance display area B1 in the basic screen B after the button P1 indicated as "Yes" is touched (in the lower left of FIG. 12(A)), a character string "move the barcode of the point card closer to the glass plane" is displayed as guidance. At this time, in the user area B2 of the basic screen B, a picture of moving a card closer to the reading face 203a of the barcode scanner 203 is displayed. As described above, in the embodiment, a customer code specifying a customer is printed in the form of a barcode on the point card held by the customer. The barcode scanner 203 decodes a light reception signal of the barcode on the basis of an output signal of the photosensitive element, obtains the customer code expressed by the barcode as code data, and outputs the code data to the controller 253 of the settlement terminal 201. The controller 253 of the settlement terminal 201 receives the code data, obtains corresponding data from the customer database CDB and, subsequently, waits for reading the barcode attached to the item. In the user area B2, a cancel button X indicating "cancel" is displayed. When the cancel button X is touched, the controller 253 grays out the basic screen B and displays again the point card possession confirmation screen P (in the upper left of FIG. 12(A)).

Also when the button P2 indicated as "No" is touched in the point card possession confirmation screen P (in the upper left of FIG. 12(A)), the controller 253 waits for reading of a barcode attached to the item.

In the guidance display area B1 in the basic screen B in a state where the controller 253 waits for reading of a barcode attached to the item (in the upper right of FIG. 12(A)), a character string "move the barcode on the item closer to the glass plane" is displayed together with a picture showing the state. At this time, in the user area B2 of the basic screen B, an item designation button B22 for designating an item to which a barcode is not attached is displayed. As transaction information, transaction information B21 including the name of an item to be purchased, the number of items, unit price, and total amount of items to be purchased is displayed. In an example of the screen shown in the upper right of FIG. 12(A), a state where one item of crisps has been registered is shown. Further, in the user area B2 of the basic screen, a cancel button Y and a call button Z are displayed. The cancel button Y is a button for instructing cancellation of the process. The call button Z is a button for calling a clerk. The controller 253 of the settlement terminal 201 generates the cancel button Y and the call button Z as necessary to appear in each of screens shifting according to the flow of the item sales data process. When a customer holds an item over the barcode scanner 203 to make the barcode read in accordance with the guidance displayed in the guidance display area B1, the controller 253 of the settlement terminal 201 executes the above-described retrieving process, and obtains necessary information from the PLU file PF and the weight data file WDF.

The controller 253 grays out the user area B in the basic screen B, generates a reading confirmation screen C, and superimposes the generated reading confirmation screen C on the user area B2 (in the lower right of FIG. 12(A)). The reading confirmation screen C includes information such as the unit price of the item whose barcode retrieved from the PLU file PF is read, the number of items to be purchased, and purchase amount. The reading confirmation screen C also includes characters based on text data of the name of the item retrieved from the item name recorded in the PLU file PF and a picture based on the image data of the item. In the case where the bar code attached to the item is read by the barcode scanner 203, the guidance of the guidance display area B1 shifts to guidance "please put the item into plastic shopping bag" (in the lower right of FIG. 12(A)). The picture displayed in the guidance display area B1 is also changed to a picture for supporting a work to put the item to the plastic shopping bag. When the customer puts the item whose barcode is read by the barcode scanner 203 into the plastic shopping bag 401 in accordance with the guidance, the item put in the plastic shopping bag 401 is loaded to the weighing plate 303 of the weighing apparatus 301, and the load is measured by the load cell unit 351. The result of measurement by the load cell unit 351 is output to the settlement terminal 201 via the transmitter 358. The settlement terminal 201 receives the result of measurement of the load cell unit 351, and executes the weight check process. When it is determined as a result of the weight check process that the weights are not the same, some operation error or injustice occurs. In this case, the controller 253 stops the progression of the item sales data process, and changes the light emission color of the light emitting unit 218 provided at the front end portion of the display pole 217 from blue to red. As a result of stopping the progression of the item sales data process, the reading confirmation screen C remains displayed on the LCD 210, and the customer is notified of the fact that the process does not progress. On the other hand, when it is determined as a result of the weight check process that the weights are the same, the controller 253 of the settlement terminal 201 erases the reading confirmation screen C, cancels grayout of the user area B2, and makes the display of the LCD 210 reset in the basic screen B for displaying the transaction information B21 (in the upper right of FIG. 12(A)).

Skipping of the weight check process will now be described. As described above, the settlement terminal 201 has a weight check execution/non-execution definition. The controller 253 refers to the weight check execution/non-execution definition, and displays a button W indicating "Next" in a lower position in the reading confirmation screen C as shown in the left and in the right of FIG. 12(B) for items defined as items which are not subject to the weight check, thereby skipping the weight check process. As shown in the left of FIG. 12 (B), in the guidance display area B1 after the barcode attached to the item is read in spite of skipping of the weight check process, a character string "Put the item into the plastic shopping bag and press the "next" button" is displayed together with a picture for supporting the work. Further, in the case of an item defined as an item whose place is defined as floor in the item placement place definition (packing is skipped) as shown in the right of FIG. 12(B), a character string "put the item in a place other than the plastic shopping bag table and press the "next" button" is displayed together with a picture for supporting the work. When the button W of the reading confirmation screen C is touched via the touch panel 211, the controller 253 allows progress of the item sales data process, deletes the reading confirmation screen C, cancels the grayout of the user area B2, and resets the display of the LCD 210 on the basic screen B for displaying the transaction information B21 (in the upper right of FIG. 12(A)).

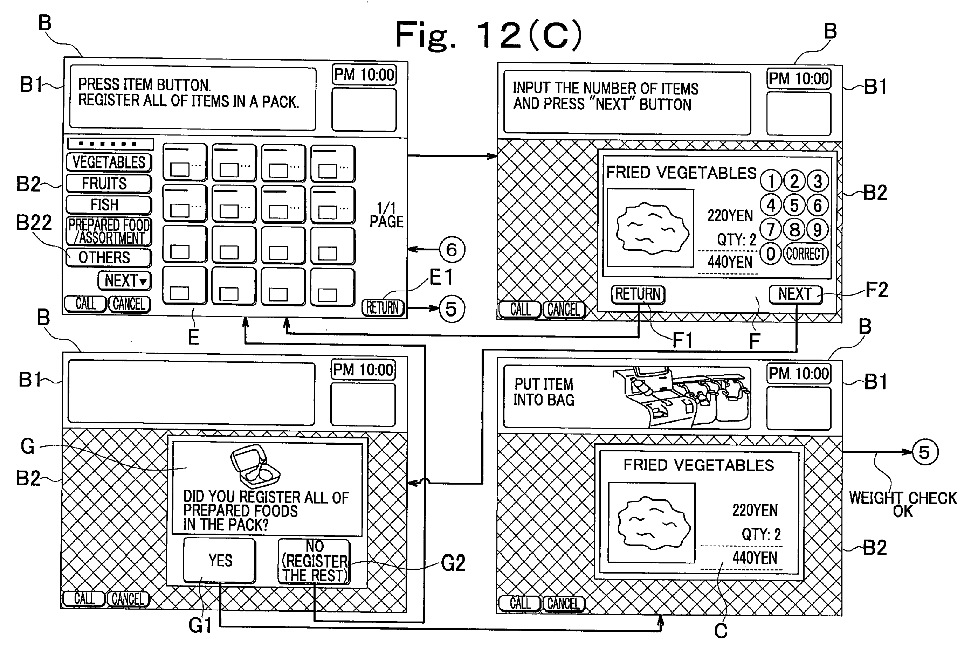

Next, handling of an item without a barcode will be described. When any of item designation buttons B22 is touched via the touch panel 211 in a state where the item designation buttons B22 are displayed in the user area B2 in the basic screen B (in the upper right of FIG. 12(A)), the user area B2 is switched to he section selection screen E (in the upper left of FIG. 12 (C)). The item designation buttons B22 shown in the upper right of FIG. 12(A) and in the upper left of FIG.12 (C) are five kinds of touch buttons of "vegetables", "fruits", "fish", "assorted prepared food", and "others". In the section selection screen E illustrated in the upper left of FIG. 12 (C), the "assorted prepared food" is touched via the touch panel 211. In this case, as the section selection screen E, various foods of total 16 kinds in four columns and four rows included in the category of "prepared food" are displayed so as to be scrollable by a scroll button (not shown). A return button E1 is displayed in the section selection screen E. When the return button E1 is touched via the touch panel 211, the section selection screen E is switched to the transaction information B21 and reset to the display of the basic screen (in the upper right of FIG. 12(A)).

In the case where the user area B2 in the basic screen B is switched to the section selection screen E, the control unit 253 displays a character string of "press button of item" in the guidance display area B1 (in the upper left of FIG. 12 (C)). With the display, the customer can know which operation to do next. When the customer touches one of foods from the section selection screen E via the touch panel 211 in accordance with the guidance, the user area B2 in the basic screen B is grayed out, and a section registration screen F (in the upper right of FIG. 12(C)) on the food appears so as to overlap the user area B2 grayed out.

The section registration screen F in the upper right of FIG. 12 (C) shows an example where "tempura" is touched. In this case, the section registration screen F on "tempura" appears. The section registration screen F includes information of the unit price of the item, the number of items to be purchased, and purchase amount. The section registration screen F also includes characters based on text data of the name of the item and a picture based on image data of the item. Further, the section registration screen F includes a numerical keypad. With the numerical keypad, the number of items to be purchased whose default value is one can be changed. The various data is, as an example, retrieved from information recorded in a section file provided separately from the PLU file PF in the settlement terminal 201. The section registration screen F includes the button F1 indicating "return" and the button F2 indicating "next". When the "return" button F1 is touched via the touch panel 211, the section registration screen F is deleted, grayout of the user area B2 in the basic screen B is cancelled, and the controller 253 returns to a screen in which the section selection screen E is displayed in the user area B2 (in the upper left of FIG.12(C)).

In the case where the section registration screen F is displayed in the user area B2 in the basic screen B (in the upper right of FIG.12(C)), the controller 253 displays a character string "enter the number of items and press the "next" button" in the guidance display area B1. With the display, the customer can know which operation to do next. When the customer changes the number of items to be purchased by the numerical keypad as necessary on the section registration screen F in accordance with the guidance and, after that, touches the "next" button F2 via the touch panel 211, an assortment confirmation screen G (in the lower left of FIG. 12 (C)) appears so as to overlap the user area B2 which is grayed out.

The assortment confirmation screen G (in the lower left of FIG. 12(C)) is a screen which appears at the time of registering "assorted prepared food". The assortment confirmation screen G includes a character string "all of "prepared foods" in the pack registered?", a button G1 indicating "Yes" and a button G2 indicating "No (register the rest)". When the button G1 indicating "Yes" in the assortment confirmation screen G is touched via the touch panel 211, the controller 253 makes the reading confirmation screen C appear (in the lower right of FIG. 12(C)), and executes the weight check process. If the result of the weight check process is normal, the reading confirmation screen C is deleted, the grayout of the user area B2 in the basic screen B is cancelled, and the controller 253 returns to the screen in which the transaction information B21 is displayed in the user area B2 (in the upper right of FIG. 12 (C)). On the other hand, when the button G2 indicating "No (register the rest)" in the assortment confirmation screen G is touched via the touch panel 211, for the purpose of registration of all of foods in the pack executed, the display of the LCD 210 shifts to a screen in which the section selection screen E is displayed in the user area B2 in the basic screen B (in the upper left of FIG.12(C)). At the time of registering "vegetable" and the like other than "assorted prepared food", when the button F1 indicating "next" in the section registration screen F is touched, the assortment confirmation screen G does not appear but the reading confirmation screen C is displayed and the weight check process is executed.

After completion of registration of all of items desired to be purchased, the customer makes payment. For this purpose, in the user area B2 of the basic screen B, a settlement button B23 indicating "payment" leading to the settlement process is displayed in a lower right position of the transaction information B21 (in the upper right of FIG.12(A)). When the settlement button B23 is touched via the touch panel 211, the controller 253 of the settlement terminal 201 executes the settlement process.

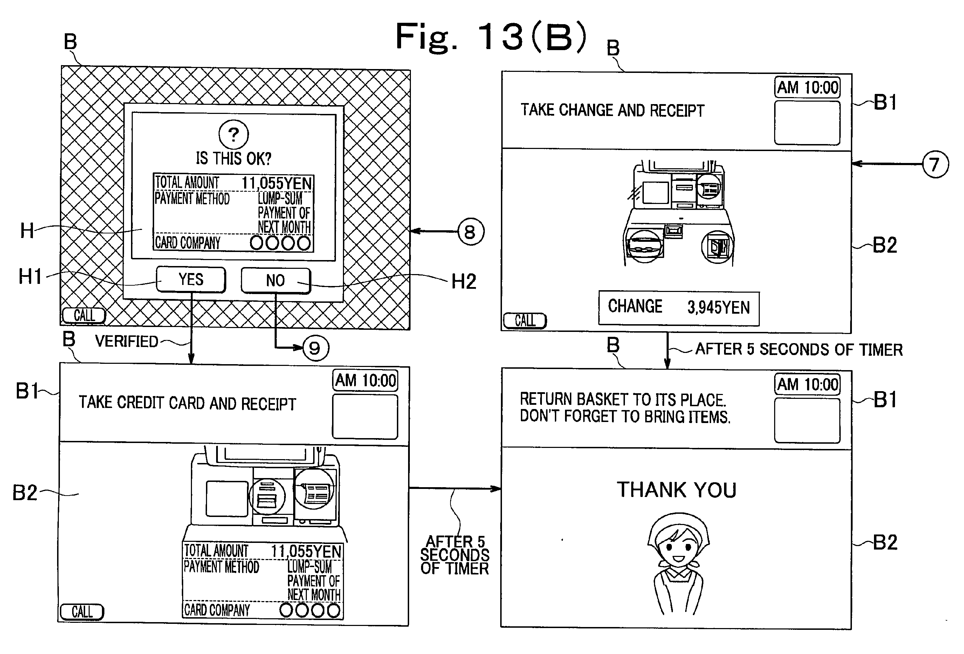

FIG. 13(A) and (B) is a schematic diagram showing another example of the screen transition at the time of executing the settlement process in the beginner mode. At the time of executing the settlement process, the controller 253 of the settlement terminal 201 encounters the branch point. Specifically, in the embodiment, the controller 253 selectively executes the settlement process by cash or the settlement process by credit. For the execution, the controller 253 generates the settlement method selection screen S including the cash settlement button S1 for selecting cash settlement and the credit settlement button S2 for selecting credit settlement, and makes it appear in the user area B2 which is grayed out (in the upper left of FIG.13(A)). The settlement method selection screen S has a return button S3. When the return button S3 is touched, the screen display of the LCD 210 returns to the basic screen B in which the transaction information B21 is displayed in the user area B2 (in the upper right of FIG. 12(A)).

When the cash settlement button S1 is touched in the settlement method selecting screen S (in the upper left of FIG. 13(A)), the settlement process advances to the flow of cash settlement. Specifically, a character string "insert cash" is displayed in the guidance display area B1 in the basic screen B, and a picture for supporting the cash inserting operation is displayed in the user area B2 (in the lower left of FIG.13(A)). When cash is inserted in the coin slot 213 or the bill inlet 215 and the cash equal to or larger than the settlement amount is inserted to the automatic teller 221, the controller 253 shifts the display of the guidance display area B1 in the basic screen B to a characteristic string "If no problem, press "checkout" button", and displays a checkout button S5 indicating "checkout" in the user area B2 in the basic screen B (in the lower right of FIG. 13(A)). Since amount information including information of the settlement amount and the inserted amount is displayed in the user area B2 and the amount information including settlement information during insertion of cash (in the lower right of FIG. 13(A)), the customer can grasp amount to be inserted and amount inserted by himself/herself. When the checkout button S5 is touched via the touch panel 211, the controller 253 of the settlement terminal 201 controls the automatic teller 221 to discharge money corresponding to the change from the coin outlet 214 or the bill outlet 216, and controls the receipt printer 251 to issue a receipt from the receipt outlet 208. The controller 253 shifts the display of the guidance display area B1 in the basic screen B to a character string "take change and receipt". In the user area B2, a picture emphasizing the receipt outlet 208, the coin outlet 214, and the bill outlet 216 is displayed. In the user area B2, the amount of the change is also displayed (in the upper right of FIG. 13(B)). For example, when five seconds elapse from the display transition by a timer (not shown) provided in the settlement terminal 201, the controller 253 changes the display of the basic screen B to the final display (in the lower right of FIG. 13(B)). As shown in the lower right of FIG. 13(B), the final display has, as a guidance, a message to ask the customer to return the basket to a basket place and take the items in the user area B1. The final display has, as the guidance, also a character string "thank you" and a picture of a clerk are displayed in the user area B2. While the final display is provided for the LCD 210, the controller 253 of the settlement terminal 201 executes a process of giving service points according to the settlement amount. That is, the controller 253 updates the customer database CDB by adding service points to be given.

On the other hand, in the case where the credit settlement button S2 is touched in the settlement method selection screen S (in the upper left of FIG. 13 (A)), the settlement process advances to the flow of credit settlement. A character string "insert your credit card" is displayed in the guidance display area B1 in the basic screen B, a picture for supporting card insertion is displayed in the user area B2 (in the upper right of FIG. 13(A)). When a credit card is inserted from the card insertion slot 212 and data stored in magnetic stripes of the credit card is read by the card reader/writer 252, the controller 253 grays out the basic screen B, generates a credit settlement confirmation screen H, and displays it on the basic screen B (in the upper left of FIG. 13(B)). The credit settlement confirmation screen H has a character string "Is the data fine?". Below the character string, settlement amount, lump-sum payment or installment payment, information of the credit card company, and the like are displayed. Further, the credit settlement confirmation screen H includes a button H1 indicating "yes" and a button H2 indicating "No". When the button H2 indicting "No" is touched, the controller 253 deletes the credit settlement confirmation screen H, makes the card reader/writer 252 give the credit card back, and returns again to the screen display requiring card insertion (in the upper right of FIG. 13 (A)). On the other hand, when the button H1 indicating "Yes" is touched, the controller 253 of the settlement terminal 201 executes verifying process. The verifying process is a process of obtaining data including the settlement amount, card information read by the card reader/writer 252, and the like, transmitting the data to a computer of a credit card company via a relay center such as CAFIS, and obtaining verification. When the card is verified as a result of the verifying process, the controller 253 of the settlement terminal 201 drives the card reader/writer 252 to return the inserted credit card from the card insertion slot 212, and drives the receipt printer 252 to issue a receipt from the receipt outlet 208. The controller 253 changes the guidance display area B1 in the basic screen B to a characteristic string "take your credit card and receipt", and displays a picture emphasizing the card insertion slot 212 and the receipt slot 208 in the user area B2. In the user area B2, settlement amount, lump-sum payment or installment payment, information of the credit card company, and the like are also displayed (in the lower left of FIG. 13(B)). When five seconds are counted from the display transition by a timer, the controller 253 changes the display of the basic screen B to the final display in a manner similar to the case where cash settlement is performed (in the lower right of FIG. 13 (B)).

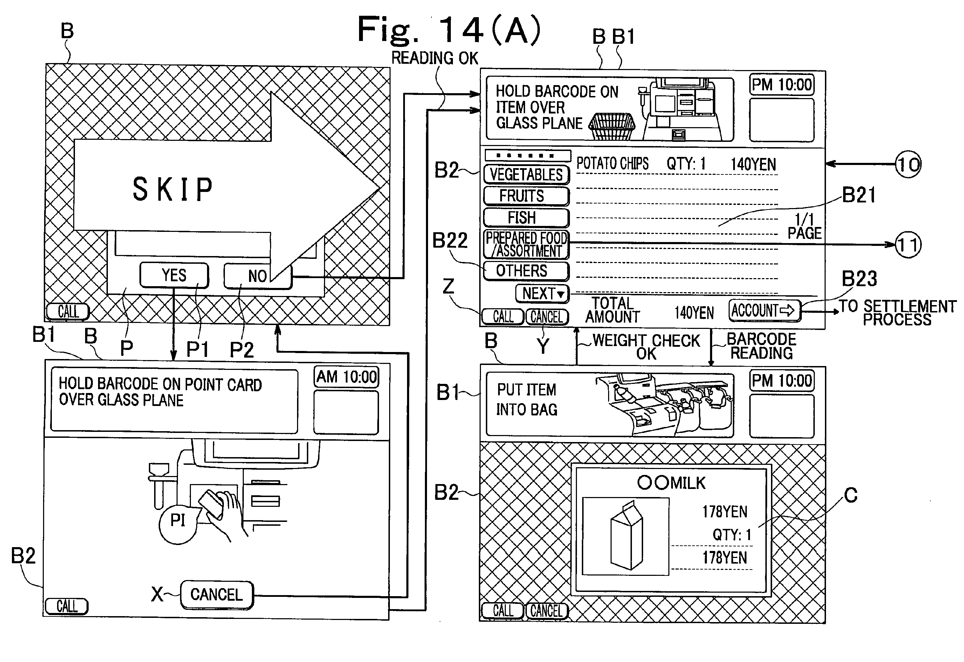

A screen transition example in a state where the terminal shifts to the smart mode will be described with reference to FIGS. 14(A) to 15(B). In the smart mode, a display skipping process is executed. That is, the button screens are skipped.

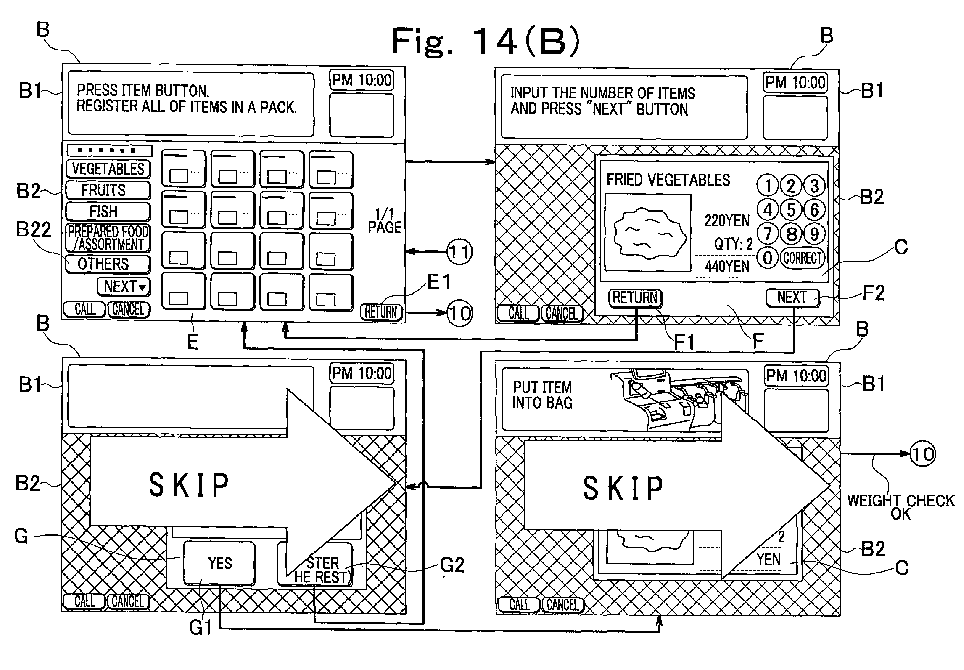

FIG. 14(A) and (B) is a schematic diagram showing an example of shift of the screen at the time of executing the item sales data process in the smart mode. First, when a smart mode button M2 is touched via the touch panel 211 in the mode selection screen M (see FIG. 9), as shown in the upper left of FIG. 14(A), the controller 253 skips display of the point card possession confirmation screen P and waits for reading of a customer code (in the lower left of FIG. 14(A)). The process of skipping display of the point card possession confirmation screen P is not performed by execution of the display skipping process. As shown in the lower left of FIG. 14(B), display of the assortment confirmation screen G is skipped. Further, as shown in the lower right of FIG. 14(B), display of the reading confirmation screen C to be displayed next is also skipped. That is, in this case, in the operation history of the customer database CDB, predetermined number of times of touching the buttons G1 and G2 in the assortment confirmation screen G is stored. The number of times of touching the "yes" button G1 is larger. In the operation history, the latest operation flag FL is stored for the button G1.

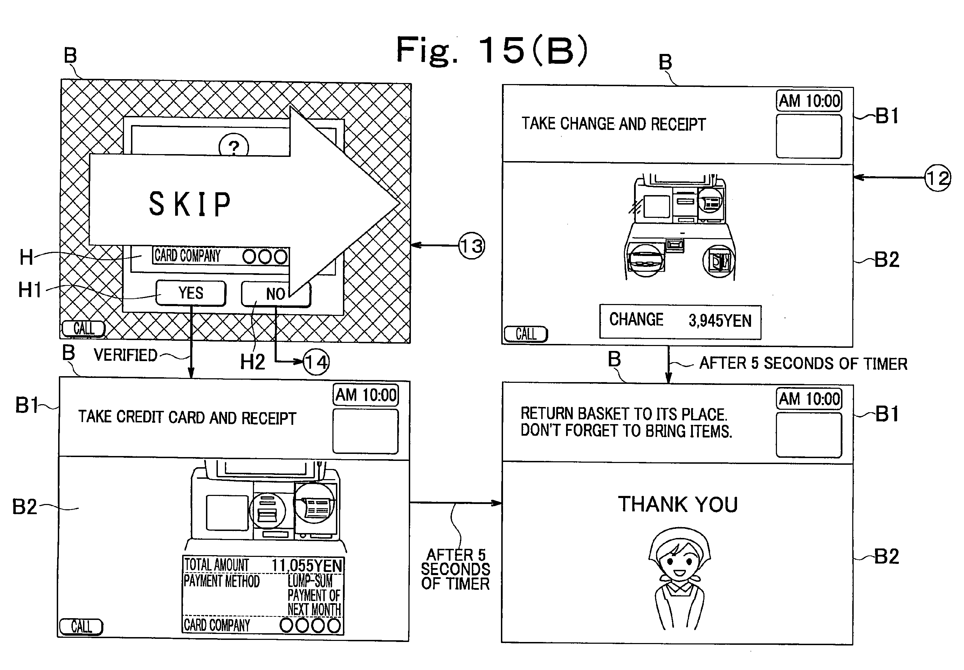

FIG. 15(A) and (B) is a schematic diagram showing another example of the screen transition when the settlement process is executed in the smart mode. When the settlement button B23 (in the lower left of FIG. 14 (A)) displayed in the user area B2 in the basic screen B is touched, as shown in the upper left of FIG. 15(A), the controller 253 skips the display of the settlement method selection screen S. The controller 253 advances to settlement corresponding to the button which is touched more between the cash settlement button S1 and the credit settlement button S2. The controller 253 also advances to settlement corresponding to the button in which the latest operation flag FL is stored. In the case where the cash settlement process is performed (in the lower left of FIG. 15(A)), the controller 253 of the settlement terminal 201 does not make the user area B2 of the basic screen B shift to the screen display using the checkout button S5 (in the lower right of FIG. 15(A)), but drives the automatic teller 221 to discharge money corresponding to the change from the coin outlet 214 or the bill outlet 216. The controller 253 controls the receipt printer 251 to issue a receipt from the receipt outlet 208 (in the upper right of FIG. 15 (B)). That is, in the operation history, predetermined number of times of touching the checkout button S5 is stored. On the other hand, in the case where the credit settlement process is performed (in the upper right of FIG. 15(A)), if a credit card is inserted in the card insertion slot 212, the controller 253 of the settlement terminal 201 skips display of the credit settlement confirmation screen H (in the upper left of FIG. 15(B)), and the authenticating process is executed. In this case, in the operation history, for example, the latest operation flag FL is stored with respect to the "yes" button H1 of the credit settlement confirmation screen H.

As described above, in the embodiment, the display of the button screen including the button is skipped according to the operation history of the customer, and the process advances without requiring the button touching operation. Consequently, the self-checkout terminal which gives comfortable guidance to both inexperienced customer and accustomed customers to operations can be provided.

It is explicitly stated that all features disclosed in the description and/or the claims are intended to be disclosed separately and independently from each other for the purpose of original disclosure as well as for the purpose of restricting the claimed invention independent of the composition of the features in the embodiments and/or the claims. It is explicitly stated that all value ranges or indications of groups of entities disclose every possible intermediate value or intermediate entity for the purpose of original disclosure as well as for the purpose of restricting the claimed invention, in particular as limits of value ranges.

## Claims

1. A self-checkout terminal (101) **characterized by** comprising:
a settlement terminal (201) including a customer code input unit (203) for inputting a customer code specifying a customer, an item code input unit (203) for inputting an item code specifying an item, a display unit (210) for displaying information on a screen, a touch panel (211) disposed on the screen, a settlement unit (221a) capable of performing settlement, and an information processor (253) for executing an information process; and
a weighing apparatus (301) including a table (303a, 306) on which an item is to be placed, a signal output unit (357a) for outputting an output signal according to weight of the item placed on the table, a transmitting unit (358) for transmitting data to the settlement terminal, and a computing unit (357a) for outputting a weight value based on the output signal to the transmitting unit,
wherein the information processor executes:
an item sales data process including a retrieving process for obtaining unit price and reference weight corresponding to an item code input by the item code input unit from an item data file (PF) in which, in correspondence with an item code, unit price and reference weight of an item determined by the item code are stored, a weight check process for determining whether a weight value transmitted from the weighing apparatus after input of the item code by the item code input unit and a reference weight obtained by the retrieving process are the same or not, an item information registering process for storing item information including the input item code and the unit price obtained by the retrieving process when it is determined that the weight values are the same as a result of the weight check process, and a settlement process for calculating a settlement amount on the basis of the unit price obtained by the retrieving process and performing settlement using the settlement unit on the settlement amount;
a stopping process for stopping procedure of the item sales data process by displaying a button on a predetermined scene during the item sales data process on the screen of the display unit;
a re-starting process, when the button is touched via the touch panel, for cancelling the stop of procedure of the item sales data process and continuing the process;
an operation history storing process for storing history of operations of touching the button in association with a customer code input by the customer code input unit into a storing unit (254); and
a process of determining the number of operation times, for referring to the operation history prior to display of the button on the screen of the display unit in a predetermined scene during the item sales data process and, when the number of times of touching the button to be displayed in the scene is equal to or larger than a predetermined number of times, continuing the item sales data process without performing the stopping process.

2. The self-checkout terminal according to claim 1,
**characterized in that** when there are a plurality of buttons to be displayed in a predetermined scene during the item sales data process, the information processor generates the operation history so that each of the number of times of touching each of the buttons is associated with the customer code in the operation history storing process; and
the information processor regards that the button which is touched the most in the operation history is touched in the process of determining the number of operation times, and continues the process.

3. The self-checkout terminal according to claim 1,
**characterized in that** when there are a plurality of buttons to be displayed in a predetermined scene during the item sales data process, the information processor associates the number of times of touching each of the buttons with the customer code, and generates the operation history including latest operation information indicative of the button which is touched most recently; and
the information processor assumes that the button which is indicated by the latest operation information stored in the operation history is touched in the process of determining the number of operation times, and continues the process.

4. The self-checkout terminal according to claim 1,2 or 3
**characterized by** comprising a use start determining unit (253a) for determining whether a customer starts using the self-checkout terminal or not,
when it is determined that use of the self-checkout terminal is started, the information processor executes a process of displaying a selection screen for making one of a beginner mode and a non-beginner mode to be selected in the screen of the display unit and, only when it is determined that the non-beginner mode is selected, the information processor executes the stopping process.

5. A method of displaying a screen of a self-checkout terminal (101), **characterized by** comprising:
calculating a weight value on the basis of an output signal output from a signal output unit of a weighing apparatus and making a transmitting unit of the weighing apparatus output the weight value toward a settlement terminal by a computing unit of the weighing apparatus, and outputting an output signal according to weight of an item placed on a table of the weighing apparatus by the signal output unit, wherein the settlement terminal including a customer code input unit for inputting a customer code specifying a customer, an item code input unit for inputting an item code specifying an item, a display unit for displaying information on a screen, a touch panel disposed on the screen, a settlement unit capable of performing settlement, and an information processor for executing an information process;
executing an item sales data process by the information processor, wherein the item sales data process including a retrieving process for obtaining unit price and reference weight corresponding to an item code input by the item code input unit from an item data file in which, in correspondence with an item code, unit price and reference weight of an item determined by the item code are stored, a weight check process for determining whether a weight value transmitted from the weighing apparatus after input of the item code by the item code input unit and a reference weight obtained by the retrieving process are the same or not, an item information registering process for storing item information including the input item code and the unit price obtained by the retrieving process when it is determined that the weight values are the same as a result of the weight check process, and a settlement process for calculating a settlement amount on the basis of the unit price obtained by the retrieving process and performing settlement using the settlement unit on the settlement amount;
executing a stopping process of stopping procedure of the item sales data process by displaying a button on a predetermined scene during the item sales data process on the screen of the display unit by the information processor;
executing a re-starting process, when the button is touched via the touch panel, for cancelling the stop of procedure of the item sales data process and continuing the process by the information processor;
executing an operation history storing process for storing history of operations of touching the button in association with a customer code input by the customer code input unit into a storing unit by the information processor; and
executing a process of determining the number of operation times, for referring to the operation history prior to display of the button on the screen of the display unit in a predetermined scene during the item sales data process and, when the number of times of touching the button to be displayed in the scene is equal to or larger than a predetermined number of times, continuing the item sales data process without performing the stopping process by the information processor.

6. The method of displaying a screen of a self-checkout terminal, according to claim 5,
**characterized in that** at the time of executing the operation history storing process when there are a plurality of buttons to be displayed in a predetermined scene during the item sales data process, the information processor generates the operation history so that the number of times of touching each of the buttons is associated with the customer code; and
at the time of executing the process of determining the number of operation times, the information processor assumes that the button which is touched the most in the operation history is touched, and continues the process.

7. The method of displaying a screen of a self-checkout terminal according to claim 5,
**characterized in that** at the time of executing the operation history storing process when there are a plurality of buttons to be displayed in a predetermined scene during the item sales data process, the information processor generates the operation history so that the number of times of touching each of the buttons is associated with the customer code, and latest operation information indicative of the button which is touched most recently is included; and
at the time of executing the process of determining the number of operation times, the information processor assumes that the button which is indicated by the latest operation information stored in the operation history is touched, and continues the process.

8. The method of displaying a screen of a self-checkout terminal according to claim 5,6 or 7,
**characterized by** comprising, when it is determined that use of the self-checkout terminal is started, executing a process of displaying a selection screen for making one of a beginner mode and a non-beginner mode to be selected in the screen of the display unit, by the information processor,
only when selection of the non-beginner mode is determined, the information processor executes the stopping process.
